# EUROPEAN PATENT SPECIFICATION

(11) **EP 4 559 768 B1**
(45) Date of publication and mention of the grant of the patent: **03.12.2025**
(21) Application number: 23211910.7
(22) Date of filing: 24.11.2023
(51) Int. Cl.: B60T 17/08

(54) **A BRAKE RELEASE SYSTEM FOR A VEHICLE COMPRISING A PARKING BRAKE**
BREMSLÖSESYSTEM FÜR EIN FAHRZEUG MIT EINER FESTSTELLBREMSE
SYSTÈME DE DESSERRAGE DE FREIN POUR UN VÉHICULE COMPRENANT UN FREIN DE STATIONNEMENT

(43) Date of publication of application: 28.05.2025
(73) Proprietor: VOLVO TRUCK CORPORATION, 405 08 Göteborg (SE)
(72) Inventor: JEYAKAR M R, Amarnath, 560075 Bangalore (IN)
(74) Representative: Zacco Sweden AB

(56) References cited:
- EP-A1- 3 787 942
- US-A1- 2010 237 690
- US-A1- 2022 258 712
- US-A1- 2022 289 159
- US-A1- 2023 010 827

## Description

### TECHNICAL FIELD

The invention relates generally to a brake release system. In particular aspects, the disclosure relates to a brake release system for a vehicle comprising a parking brake. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

One type of parking brake in heavy-duty vehicles comprises a brake chamber at a wheel end part. When the brake chamber is filled with pressurized air the parking brake is released. When the pressurized air is evacuated from the brake chamber, the parking brake becomes applied. If the air supply passage to the parking brake fails, for example in case of a continuous leak condition, there will be an unexpected braking effect during vehicle running condition. This may result in damaging of the wheel end part, and may sometimes even lead to a major accident. EP 3787942 A1 and US 2022/258712 A1 describe braking systems for tractor-trailer utility vehicles, the systems comprising a parking brake with a brake chamber and which is controllable by a driver by setting an electronic parking brake switch in an ON state to engage the parking brake or in an OFF state to release the parking brake.

### SUMMARY

According to a first aspect of the disclosure, there is provided a brake release system for a vehicle comprising a parking brake which has a brake chamber and which is controllable by a driver by setting an electronic parking brake switch in an ON state to engage the parking brake or in an OFF state to release the parking brake, the brake release system comprising:
- an air distributor configured to receive and distribute pressurized air,
- a regular air supply passage configured to receive pressurized air from the air distributor and supply the pressurized air to the brake chamber for releasing the parking brake,
- an auxiliary air supply passage configured to receive pressurized air from the air distributor and supply the pressurized air to the brake chamber for releasing the parking brake, wherein the auxiliary air supply passage is configured to be used in case of failure of the regular air supply passage,
- a valve device provided in the auxiliary air supply passage, wherein the valve device has:
   - a closed first state in which pressurized air is prevented from being supplied from the auxiliary air supply passage to the brake chamber through the valve device, and
   - an open second state in which pressurized air is allowed to be supplied from the auxiliary air supply passage to the brake chamber through the valve device for releasing the parking brake,

wherein the valve device is configured to receive a first signal, S1, indicative of loss of pressure in the regular air supply passage,
wherein the valve device is further configured to receive a second signal, S2, indicative of the electronic parking brake switch being in the OFF state,
wherein upon receipt of both signals S1 and S2, the valve device is triggered to change from the closed first state to the open second state to allow pressurized air to pass to the brake chamber via the auxiliary air supply passage.
The first aspect of the disclosure may seek to solve the problem of unexpected application of the parking brake occurring due to a loss of pressure (e.g. due to leakage) in a regular air supply passage to the brake chamber of the parking brake. A technical benefit may include that by monitoring the pressure in the regular air supply passage and detecting an unexpected loss of pressure, the auxiliary air supply passage may be activated to effectively provide pressurized air to the brake chamber and thereby avoiding the parking brake to be inadvertently applied. By double-checking that the driver has not switch the electronic parking brake switch to the ON state, i.e. it is still in the OFF state, a confirmation is made that the loss of pressure is indeed unexpected and inadvertent.

The air distributor may, for example, receive pressurized air from a compressor. Furthermore, the air distributor may be operatively connected to the electronic parking brake switch. Thus, under normal operating conditions, when the driver sets the electronic parking brake switch in the OFF state, the air distributor will control pressurized air to be provided through the regular air supply passage to the brake chamber so as to have the parking brake in a released state. Similarly, under normal operating conditions, when the driver sets the electronic parking brake switch in the ON state, the air distributor will not provide pressurized air to the brake chamber, but will instead allow pressurized air to be released from the brake chamber so as to have the parking brake in an engaged/applied state. To this end, the air distributor may suitably be provided with an exhaust port for enabling the pressurized air in the brake chamber to be evacuated via the regular air supply passage and through the exhaust port of the air distributor.

Optionally in some examples, including in at least one preferred example, the brake release system may further comprise:
- a blocking arrangement having a blocking state in which fluid communication between the brake chamber and the regular air supply passage is blocked and a non-blocking state in which fluid communication between the brake chamber and the regular air supply passage is open,
wherein, a change from the closed first state to the open second state of the valve device triggers the blocking arrangement to change from its non-blocking state to its blocking state. A technical benefit may include that by blocking the fluid communication to the regular air supply passage, the pressurized air delivered through the auxiliary air supply passage will remain in the brake chamber. Thus, pressure can be maintained in the brake chamber, and loss of pressure due to any leakage in the regular air supply passage may be avoided.

The blocking arrangement may, for instance, be implemented in the form of a valve. For instance, the blocking arrangement may be implemented as comprising a solenoid valve, which could, for instance, be triggered by signals S1 and S2 to block the fluid communication between the brake chamber and the regular air supply passage. In other examples, the blocking arrangement may be implemented as comprising a shuttle valve. This will be discussed in more detail in the following.

Optionally in some examples, including in at least one preferred example, the blocking arrangement may be or may comprise a shuttle valve having three openings, a first opening to the brake chamber, a second opening to said auxiliary air supply passage, and a third opening to the regular air supply passage, wherein when the auxiliary air supply passage supplies pressurized air to the brake chamber via the shuttle valve, the shuttle valve closes fluid communication between the brake chamber and the regular air supply passage. A technical benefit may include that this provides a simple yet efficient way of controlling the blocking of the fluid communication between the brake chamber and the regular air supply passage. As long as no pressurized air is provided to the shuttle valve from the auxiliary air supply passage the fluid communication between the brake chamber and the regular air supply passage may remain open, whereas when the pressurized air is provided from the auxiliary air supply passage it will effectively push internal components of the shuttle valve so that the position of the shuttle valve becomes changed and said fluid communication becomes closed. Thus, the shuttle valve may be pneumatically controlled and does not require any additional electronics.

Optionally in some examples, including in at least one preferred example, after the valve device has been changed to the open second state, and the valve device stops receiving the second signal S2 as a result of the electronic parking brake switch having been set in the ON state, the valve device becomes changed back to the closed first state to allow release of pressurized air from the brake chamber. A technical benefit may include that even though the regular air supply passage has failed, the parking brake functionality may still be functional. Thus, the driver may apply and release the parking brake, by means of the auxiliary air supply passage, until the regular air supply passage has been repaired.

Optionally in some examples, including in at least one preferred example, the valve device may comprise an exhaust port, wherein, in the closed first state of the valve device, pressurized air may be evacuated from the brake chamber through the exhaust port. A technical benefit may include that parking brake may be conveniently engaged by letting air in the brake chamber be evacuated through the exhaust port of the valve device. Hereby, no additional exhaust means needs to be provided in the brake chamber or in the auxiliary air supply passage.

Optionally in some examples, including in at least one preferred example, the valve device may comprise a solenoid valve which is biased towards the closed first state when it is not energized, wherein upon the valve device receiving the first signal, S1, and the second signal, S2, the solenoid valve becomes energized to change from the closed first state to the open second state. A technical benefit may include that a solenoid valve may be efficiently controlled by electronic signals, without requiring any additional mechanical control.

Optionally in some examples, including in at least one preferred example, the solenoid valve may be energized by an electrical signal triggered by receipt of the first signal, S1, and the second signal, S2. A technical benefit may include that this ensures that both the first signal S1 and the second signal S2 have indeed been issued, thereby avoiding energizing the solenoid valve in situations in which only one of the signals S1 and S2 has been issued. Thus, the combination of pressure loss and the electronic parking switch being in an OFF state is indicative of that the brake chamber needs to be pressurized via the auxiliary air supply passage.

Optionally in some examples, including in at least one preferred example, the valve device may comprise, in series connection, a first switch and a second switch, each switch having an open position and a closed position, wherein the first and second switches are configured to become closed by the signals S1 and S2, respectively, wherein when at least one of the first and second switches is open, the valve device remains in the closed first state or is changed from the open second state to the closed first state, wherein when each one of the first and second switches is closed, the solenoid valve of the valve device is energized. A technical benefit may include that such series connection provides an efficient way to control the activation of the valve device only when both signals S1 and S2 have been received. Suitably, the previously discussed triggering of an electrical signal when both signals S1 and S2 have been received may be implemented by means of this example with two switches. Thus, when both the first and the second switch are closed the above-mentioned electrical signal may become triggered to activate the valve device.

Optionally in some examples, including in at least one preferred example, the brake release system may further comprise:
- a pressure sensor, such as a pressure switch, configured to issue said first signal, S1, when the pressure in the regular air supply passage drops below a predefined pressure value. A technical benefit may include that a pressure sensor, such as a pressure switch, may provide a reliable indication of loss of pressure in the regular air supply passage. For example, when the pressure drops below the predefined pressure value, the pressure switch may become closed, so that first signal S1 becomes issued. Such as pressure switch may also send the first signal S1 when the regular air supply passage functions normally, i.e. there is no failure such as a leakage. In particular, when the driver wants to engage the parking brake, and therefore sets the electronic parking brake switch in the ON state, pressure will be evacuated from the brake chamber so that the parking brake becomes engaged. Due to this evacuation of pressurized air, the pressure in the regular air supply passage will drop, and the first signal S1 will be issued. However, since the electronic parking brake switch is in the ON state, the second signal S2 will not be issued, and therefore the valve device will not become triggered to change from the closed first state to the open second state. Thus, even though the first signal S1 is issued in this case, this will not be interpreted as a failure in the regular air supply passage. When the driver wants to drive again and thus wants to release the parking brake, the driver will change the electronic parking switch to the OFF state. Within a few seconds the regular air supply passage will be filled with pressurized air and the first signals S1 will no longer be sent. Thus, even though directly after setting the electronic parking brake switch to OFF state, both signals S1 and S2 may be received by the valve device for a brief second, this will not affect the driving experience for the driver.

Optionally in some examples, including in at least one preferred example, the brake release system may further comprise:
- a leak arrest valve having an open position in which fluid communication between the air distributor and the regular air supply passage is open, and a closed position in which fluid communication between the air distributor and at least a portion of the regular air supply passage is closed. A technical benefit may include that this enables reduction of air loss in the system. In particular, such reduction or avoidance of air loss may be achieved by setting the leak arrest valve in the closed position when a failure, such as a continuous leak issue, has been determined to have occurred.

Optionally in some examples, including in at least one preferred example, upon receipt of both signals S1 and S2 by the valve device, the leak arrest valve may become automatically closed to avoid system pressure loss. A technical benefit may include that unnecessary time delay and pressure loss can be avoided as the system does not require a person to manually activate the closing of the leak arrest valve.

Optionally in some examples, including in at least one preferred example, when the valve device is changed to be in the open second state, a warning message or warning signal may be sent to a user interface to alert the driver of failure of the regular air supply passage. A technical benefit may include that the user is made aware of the failure, and may therefore at his/her earliest convenience decide to drive the vehicle to a repair shop to have the regular air supply passage repaired.
Optionally in some examples, including in at least one preferred example, the leak arrest valve may be configured such that a change from its open position to its closed position is manually activatable by the driver upon receiving said warning message or warning signal. A technical benefit may include that upon receiving the warning message or warning signal, the driver may stop the vehicle and try to inspect the regular air supply passage in order to find the position of the leakage. If the leakage is downstream of the leak arrest valve it makes sense to activate the leak arrest valve. If the leakage is upstream of the leak arrest valve, activating the leak arrest valve will not be of help. Thus, even though the leak arrest valve can be placed as close to the air distributor as possible, there is nevertheless a risk of a leakage occurring upstream of the leak arrest valve. However, manual instead of automatic activation, gives the driver an incentive to actually search for the place of leakage. From the above, it can be understood that the leak arrest valve may, in at least some examples, be considered to be located in the regular air supply passage. Thus, the leak arrest valve may in its closed position prevent fluid to be communicated from the air distributor to a portion of the regular air supply passage located downstream of the leak arrest valve.

Optionally in some examples, including in at least one preferred example, the leak arrest valve may be automatically re-opened when the electronic parking brake switch is first set in ON state and then in OFF state. A technical benefit may include that this avoids blocking the air after the failure has been resolved in the regular air supply passage, such as after the vehicle has been repaired in a repair shop. In some examples, this may be triggered by using signal S1 or by some other triggering signal. In other examples a manual leak arrest switch, for example, in the cabin, may be used to re-open the leak arrest valve.

According to a second aspect of the disclosure, there is provided a vehicle, in particular a heavy-duty vehicle, comprising the brake release system according to the first aspect, including any examples thereof. The second aspect of the disclosure may seek to solve the corresponding problem and include corresponding technical benefits as the first aspect, including any examples thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates a vehicle according to one example of this disclosure.
**FIG. 2** schematically illustrates a brake release system in accordance with one example of this disclosure. In particular, **FIG. 2** illustrates an inactive state of the brake release system, and a properly working regular air supply passage.
**FIG. 3** schematically illustrates the brake release system of **FIG. 2****,** however, in **FIG. 3** it is in an active state, due to failure in the regular air supply passage.
**FIGS. 4A-4B** show ladder diagrams for illustrating an example of implementing the operation of a valve device of the brake release system in accordance with one example.
**FIG. 5** schematically illustrates that a leak arrest valve may be included in a brake release system in accordance with one example.

### DETAILED DESCRIPTION

The detailed description set forth below provides information and examples of the disclosed technology with sufficient detail to enable those skilled in the art to practice the disclosure.

A pneumatic parking brake, also known as an air parking brake, is a type of parking brake system that uses compressed air to engage and disengage the brake. This type of system is commonly found in large vehicles, such as heavy-duty vehicle, for example buses and trucks. Such parking brake systems rely on a supply of compressed air, typically provided by the vehicle's air brake system. The parking brake comprises brake chambers. When the pressurized air is evacuated from the brake chamber, the parking brake becomes applied. If the regular air supply passage to the parking brake fails, for example in case of a continuous leak condition, there will be an unexpected braking effect during vehicle running condition. This may result in damaging of the wheel end part, and may sometimes even lead to a major accident.

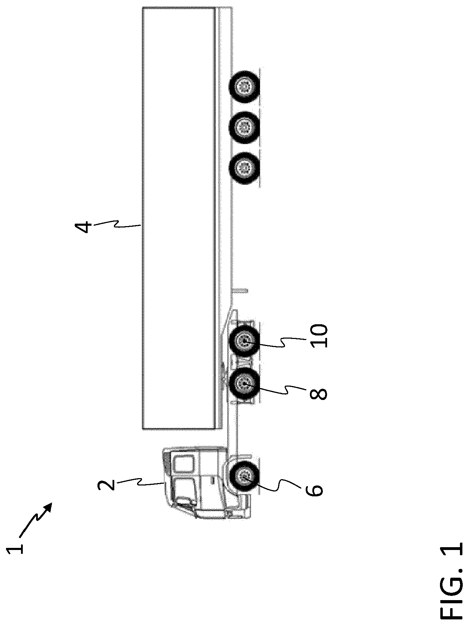

**FIG. 1** schematically illustrates a vehicle 1 according to one example of this disclosure. More specifically, the illustrated vehicle 1 is a heavy-duty vehicle combination which comprises a tractor unit 2 and a trailer unit 4. The tractor unit 2 has three wheel axles 6, 8, 10, each one of the wheel axles 6, 8, 10 having at least one left wheel and at least one right wheel. Some of the wheels, or each wheel, may be associated with a respective brake chamber of a parking brake. In this example, the tractor unit 2 has a front axle 6 and two rear axles 8, 10. One of the rear axles 8, 10 may be a lift axle. It should be understood that the teachings of this disclosure may also be implemented for vehicles without any lift axle. Additionally, the teachings of the present disclosure are not limited to a particular vehicle propulsion system, i.e., the teachings herein may be implemented for vehicles propelled by internal combustion engines, traction batteries, fuel cells, hybrid systems, etc. The brake release system discussed in this disclosure may suitably be implemented in any one of the above-mentioned vehicles, including the illustrated vehicle 1. Some examples of the brake release system will be discussed in the following.

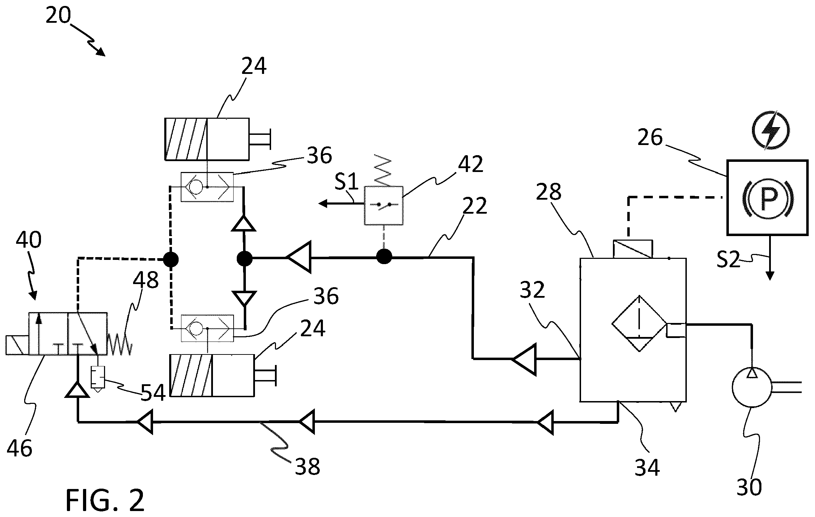

**FIG. 2** schematically illustrates a brake release system 20 in accordance with one example of this disclosure. In particular, **FIG. 2** illustrates an inactive state of the brake release system 20, and a properly working regular air supply passage 22.

The brake release system 20 illustrated in **FIG. 2** is a brake release system 20 for a vehicle (in particular a heavy-duty vehicle) comprising a parking brake which has a brake chamber. The vehicle may, for example, be of the type illustrated in **FIG. 1** or of any other type discussed in this disclosure. In **FIG. 2** two brake chambers 24 are illustrated, one provided at a wheel on a left side of the vehicle, and one provided at a wheel on a right side of the vehicle. The parking brake is controllable by a driver by setting an electronic parking brake switch 26 in an ON state to engage the parking brake or in an OFF state to release the parking brake. The electronic parking brake switch 26 may typically be provided in a driver's cabin of the vehicle.

The brake release system 20 comprises an air distributor 28 which is configured to receive and distribute pressurized air. The air distributor 28 may, for instance, receive pressurized air from an air compressor 30. The air distributor 28 may, in some examples, include a control unit, which may control the production of compressed air, control the incoming air to be dried, operating valves within the air distributor, receive input from the electronic parking brake switch 26, etc. The air distributor 28 may suitably have at least two fluid outlets 32, 34.

The brake release system 20 further comprises said regular air supply passage 22 configured to receive pressurized air from the air distributor 28 (e.g. from one of said fluid outlets 32). The regular air supply passage 22 is also configured to supply the pressurized air to the brake chambers 24 for releasing the parking brake. As illustrated by the solid lines and the arrows in **FIG. 2****,** when the regular air supply passage 22 is functioning normally, then the pressurized air may be delivered to the brake chambers 24. In the example of **FIG. 2** the pressurized air is supplied via shuttle valves 36, which will be discussed in more detail later. It should, however, be understood that shuttle valves 36 are not necessary for implementing the general ideas of this disclosure.

The brake release system 20 further comprises an auxiliary air supply passage 38 configured to receive pressurized air from the air distributor 28 (e.g. from another one of said fluid outlets 34). The auxiliary air supply passage 38 is also configured to supply the pressurized air to the brake chambers 24 for releasing the parking brake. The auxiliary air supply passage 38 is further configured to be used in case of failure of the regular air supply passage 22.

The brake release system 20 further comprises a valve device 40 provided in the auxiliary air supply passage 38. The valve device 40 is controllable between a closed first state and an open second state. In **FIG. 2****,** the valve device 40 is illustrated in its closed first state. Thus, even though pressurized air may be provided from the air distributor 28 to the auxiliary air supply passage 38, the valve device 40, being in the closed first state, prevents the pressurized air from passing the valve device 40. Thus, in the closed first state of the valve device 40, pressurized air is prevented from being supplied from the auxiliary air supply passage 38 to the brake chambers 24 through the valve device 40.

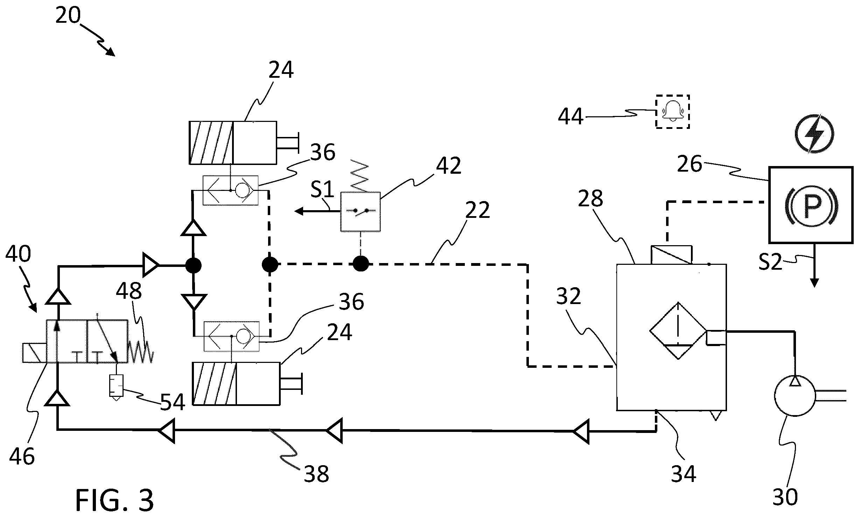

The open second state of the valve device 40 will now be discussed with respect to **FIG. 3****.** Thus, **FIG. 3** schematically illustrates the brake release system 20 of **FIG. 2****,** however, in **FIG. 3** it is in an active state, due to failure in the regular air supply passage 22.

As illustrated in **FIG. 3****,** in the open second state of the valve device 40, the valve device 40 no longer prevents the pressurized air from travelling all the way along the auxiliary air supply passage 38. This, in the open second state of the valve device 40, the pressurized air is allowed to be supplied from the auxiliary air supply passage 38 to the brake chambers 24 through the valve device 40 for releasing the parking brake.

The valve device 40 is configured to receive a first signal S1 indicative of loss of pressure in the regular air supply passage 22. Such a first signal S1 may, for instance, be provided by a pressure sensor, such as a pressure switch 42, as illustrated in **FIGS. 2** and **3****.** Thus, in **FIG. 2****,** which illustrates a normally functioning regular air supply passage 22, the pressure switch 42 is not activated, because when pressurized air is supplied in the regular air supply passage 22, the pressure therein does not drop below a predefined pressure value. **FIG. 3****,** however, illustrates a faulty regular air supply passage 22. There may for instance be a leakage in the regular air supply passage 22. When the pressure in the regular air supply passage 22 drops below the predefined pressure value, the pressure switch 42 may become activated to issue the first signal S1.

The valve device 40 may also be configured to receive a second signal S2, indicative of the electronic parking brake switch 26 being in the OFF state. When the electronic parking brake switch 26 is in the OFF state, the parking brake should be in released/disengaged condition, which means that the brake chambers 24 should be pressurized. However, if the first signal S1 is being issued even though there should be sufficient pressure in the regular air supply passage 22 due to the electronic parking brake switch 26 being in the OFF state, this is indicative of a failure in the regular air supply passage 22. Therefore, upon receipt of both signals S1 and S2, the valve device 40 is triggered to change from the closed first state (**FIG. 2**) to the open second state (**FIG. 3**) to allow pressurized air to pass to the brake chambers 24 via the auxiliary air supply passage 38. Hereby, the parking brake can be maintained in the desired released/disengaged state (as commanded by the electronic parking brake switch 26 being in the OFF state), and therefore inadvertent sudden engagement of the parking brake can be avoided.

As schematically illustrated in **FIG. 3****,** when the valve device 40 is changed to be in the open second state, a warning message or warning signal 44 may be sent to a user interface to alert the driver of failure of the regular air supply passage 22. Hereby, the driver becomes notified at an early stage and may take the vehicle to a repair shop to have the vehicle repaired.

As illustrated in **FIGS. 2** and **3****,** the valve device 40 may suitably comprise a solenoid valve 46 which is biased towards the closed first state (**FIG. 2**) when it is not energized, wherein upon the valve device 40 receiving the first signal S1 and the second signal S2, the solenoid valve 46 may become energized to change from the closed first state to the open second state (**FIG. 3**). The solenoid valve 46 may suitably become energized by an electrical signal triggered by receipt of the first signal S1 and the second signal S2. The solenoid valve 46 may suitably be provided with a spring 48 which biases the solenoid valve 46 to a normally closed state, i.e. to the closed first state (**FIG. 2**) of the valve device 40. When the solenoid valve 46 is energized, it is provided with a force that overcomes the biasing force of the spring 48 and moves the solenoid valve 46 to become opened, i.e. to the open second state (**FIG. 3**) of the valve device 40.

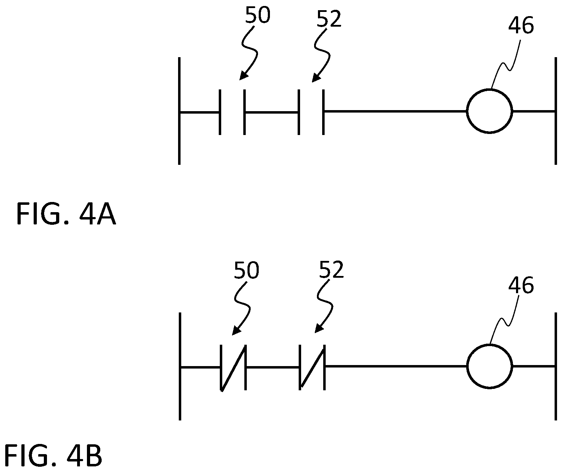

The above-mentioned triggering of the change from the closed first state to the open second state of the valve device 40, in response to receiving both signals S1 and S2, may be achieved in different manners. For instance, in some examples, a control unit may be provided to receive the signals S1 and S2 and trigger the change between the two states of the valve device 40. In other examples, the triggering may suitably be switch-based. An example of such a switch-based activation is illustrated in the ladder diagrams of **FIGS. 4A-4B****.**

**FIGS. 4A-4B** show ladder diagrams for illustrating an example of implementing the operation of a valve device of the brake release system in accordance with one example (such as the valve device 40 of the brake release system 20 in **FIGS. 2** and **3**). As illustrated in **FIGS. 4A-4B****,** the valve device may comprise, in series connection, a first switch 50 and a second switch 52. Both switches 50, 52 have an open state and a closed state. In **FIG. 4A** both switches 50, 52 are shown in their open states, whereas in **FIG. 4B** both switches 50, 52 are shown in their closed states. The first switch 50 is configured to become closed by the first signal S1, i.e. the signal indicative of loss of pressure in the regular air supply passage (e.g. issued by the pressure switch 42 in **FIGS. 2** and **3****,** or by any other suitable pressure sensor). The second switch 52 is configured to become closed by the second signal S2, i.e. the signal indicative of the electronic parking brake switch being in the OFF state. When at least one of the first and second switches 50, 52 is open, the electrical signal cannot come through to the solenoid valve 46, and the solenoid valve 46 will therefore not become energized. Thus, when at least one of the first and second switches 50, 52 is open, the valve device is prevented from activating the solenoid valve 46. However, when both the first and the second switches 50, 52 are closed (as in **FIG. 4B**), an electrical signal is allowed to reach the solenoid valve 46 so as to set the valve device in its open second state.

As illustrated in **FIGS. 2** and **3****,** the brake release system 20 may further comprise a blocking arrangement, which is here illustrated in the form of said shuttle valves 36, in particular a respective shuttle valve 36 associated with each brake chamber 24. The purpose of providing a blocking arrangement may be to have the blocking arrangement in a blocking state in which fluid communication between the brake chamber 24 and the regular air supply passage 22 is blocked. In contrast, in a non-blocking state of the blocking arrangement, fluid communication between the brake chamber 24 and the regular air supply passage 22 is open. Suitably, a change from the closed first state to the open second state of the valve device 40 may trigger the blocking arrangement to change from its non-blocking state to its blocking state. Although such blocking arrangements may be arranged with different kind of valves controlled by control units, the simple yet elegant example of a shuttle valve 36 will now be discussed in more detail.

As can be seen in **FIGS. 2** and **3****,** each shuttle valve 36 has three openings, a first opening to the brake chamber 24, a second opening to the auxiliary air supply passage 38, and a third opening to the regular air supply passage 22. When the regular air supply passage 22 supplies pressurized air to the shuttle valves 36 (**FIG. 2**), the shuttle valves 36 close fluid communication between the respective brake chamber 24 and the auxiliary air supply passage 38. In contrast, when the auxiliary air supply passage 38 supplies pressurized air to the shuttle valves 36 (**FIG. 3**), the shuttle valves 36 close fluid communication between the respective brake chamber 24 and the regular air supply passage 22. Thus, when the valve device 40 allows pressurized air to be supplied to the brake chambers 24 via the auxiliary air supply passage 38, the shuttle valves 36 will automatically close off fluid communication with the regular air supply passage 22. This is beneficial since the regular air supply passage 22 may have a leakage, and hereby loss of pressure in the brake chamber 24 may be avoided by closing off said fluid communication to the regular air supply passage 22.

In at least some examples of the herein discussed brake release system 20, after the valve device 40 has been changed to the open second state, and the valve device 40 stops receiving the second signal S2 as a result of the electronic parking brake switch 26 having been set in the ON state, the valve device 40 becomes changed back to the closed first state to allow release of pressurized air from the brake chambers 24. For instance, in the above discussed example, in which the valve device 40 comprises the solenoid valve 46, when the driver, after the solenoid valve 46 has been energized, sets the electronic parking brake switch 26 in the ON state, the lack of signal S2 will result in the solenoid valve 46 no longer being energized. Therefore, without the counterforce provided by the energization, the spring 48 of the solenoid valve 46 will urge the solenoid valve back to the closed position.

Although there may be different ways to allow the pressure to be released from the brake chambers 24, such as using separately controllable exhaust valves, in at least some examples, the pressure release functionality may suitably be integrated in the valve device 40. For instance, the valve device 40 may comprise an exhaust port 54, wherein, in the closed first state of the valve device 40, pressurized air may be evacuated from the brake chambers 24 through the exhaust port 54.

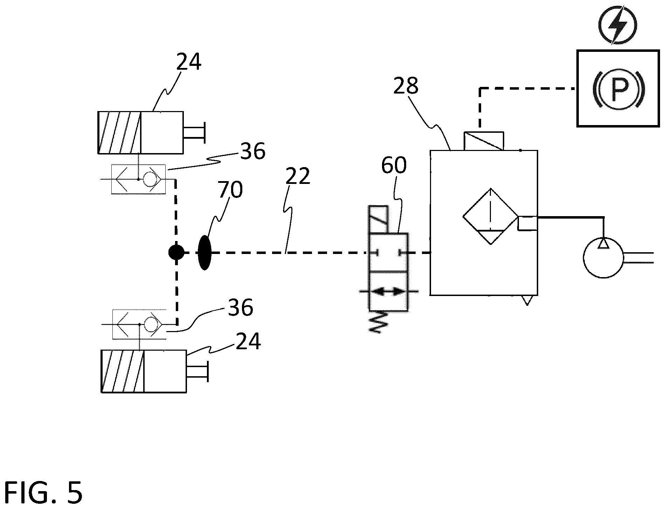

**FIG. 5** schematically illustrates that a leak arrest valve 60 may be included in a brake release system in accordance with one example. For simplicity, in **FIG. 5** only a few components of the brake release system are illustrated for explanatory purpose. As illustrated in **FIG. 5****,** the leak arrest valve 60 may, e.g. comprise or be embodied in the form of a solenoid valve, although other valve types are also conceivable. The leak arrest valve 60 may have an open position in which fluid communication between the air distributor 28 and the regular air supply passage 22 is open, and a closed position in which fluid communication between the air distributor 28 and at least a portion the regular air supply passage 22 is closed (in particular, a downstream portion of the regular air supply passage 22 is closed). In **FIG. 5****,** the leak arrest valve 60 is illustrated in its closed position. The advantage of having a leak arrest valve 60 is that in case of a leakage 70 in the regular air supply passage 22, loss of air pressure may be avoided. Although a leakage 70 in the regular air supply passage 22 will cause signal S1 to be issued and the auxiliary air supply passage to actively supply pressurized air, pushing the shuttle valves 36 to prevent fluid communication between the brake chambers 24 and the regular air supply passage 22, without the leak arrest valve 60, pressurized air from the air distributor 28 that may be provided through respective outlets to the regular air supply passage 22 and the auxiliary air supply passage will cause an unnecessary loss of pressure in the system.

The leak arrest valve 60 may be automatically or manually controllable. For instance, upon receipt of both signals S1 and S2 by the valve device, the leak arrest valve 60 may become automatically closed to avoid system pressure loss. In other cases, the leak arrest valve 60 may be configured such that a change from its open position to its closed position is manually activatable by the driver upon receiving said warning message or warning signal 44 mentioned previously with respect to **FIG. 3****.** For example, the driver may have a manually controllable switch that controls the position of the leak arrest valve 60. The leak arrest valve 60 may suitably become automatically re-opened with the electronic parking brake switch is first set in the IN state and then in the OFF state.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the invention being set forth in the following claims.

## Claims

1. A brake release system (20) for a vehicle comprising a parking brake which has a brake chamber and which is controllable by a driver by setting an electronic parking brake switch (26) in an ON state to engage the parking brake or in an OFF state to release the parking brake, the brake release system comprising:
- an air distributor (28) configured to receive and distribute pressurized air,
- a regular air supply passage (22) configured to receive pressurized air from the air distributor and supply the pressurized air to the brake chamber (24) for releasing the parking brake,
- an auxiliary air supply passage (38) configured to receive pressurized air from the air distributor and supply the pressurized air to the brake chamber for releasing the parking brake, wherein the auxiliary air supply passage is configured to be used in case of failure of the regular air supply passage, **characterised in that** the system further comprises:
- a valve device (40) provided in the auxiliary air supply passage, wherein the valve device has:
• a closed first state in which pressurized air is prevented from being supplied from the auxiliary air supply passage to the brake chamber through the valve device, and
• an open second state in which pressurized air is allowed to be supplied from the auxiliary air supply passage to the brake chamber through the valve device for releasing the parking brake,
wherein the valve device is configured to receive a first signal, S1, indicative of loss of pressure in the regular air supply passage,
wherein the valve device is further configured to receive a second signal, S2, indicative of the electronic parking brake switch being in the OFF state,
wherein upon receipt of both signals S1 and S2, the valve device is triggered to change from the closed first state to the open second state to allow pressurized air to pass to the brake chamber via the auxiliary air supply passage.

2. The brake release system of claim 1, further comprising:
- a blocking arrangement having a blocking state in which fluid communication between the brake chamber and the regular air supply passage is blocked and a non-blocking state in which fluid communication between the brake chamber and the regular air supply passage is open,
wherein, a change from the closed first state to the open second state of the valve device triggers the blocking arrangement to change from its non-blocking state to its blocking state.

3. The brake release system of claim 2, wherein the blocking arrangement is or comprises a shuttle valve (36)
having three openings, a first opening to the brake chamber, a second opening to said auxiliary air supply passage, and a third opening to the regular air supply passage, wherein when the auxiliary air supply passage supplies pressurized air to the brake chamber via the shuttle valve, the shuttle valve closes fluid communication between the brake chamber and the regular air supply passage.

4. The brake release system of any of claims 1-3, wherein after the valve device has been changed to the open second state, and the valve device stops receiving the second signal S2 as a result of the electronic parking brake switch having been set in the ON state, the valve device becomes changed back to the closed first state to allow release of pressurized air from the brake chamber.

5. The brake release system of claim 4, wherein the valve device comprises an exhaust port, (54),
wherein, in the closed first state of the valve device, pressurized air is evacuated from the brake chamber through the exhaust port.

6. The brake release system of any of claims 1-5, wherein the valve device comprises a solenoid valve which is biased towards the closed first state when it is not energized, wherein upon the valve device receiving the first signal, S1, and the second signal, S2, the solenoid valve becomes energized to change from the closed first state to the open second state.

7. The brake release system of claim 6, wherein the solenoid valve is energized by an electrical signal triggered by receipt of the first signal, S1, and the second signal, S2.

8. The brake release system of any of claims 6-7, wherein the valve device comprises, in series connection, a first switch and a second switch, each switch having an open position and a closed position, wherein the first and second switches are configured to become closed by the signals S1 and S2, respectively, wherein when at least one of the first and second switches is open, the valve device remains in the closed first state or is changed from the open second state to the closed first state, wherein when each one of the first and second switches is closed, the solenoid valve of the valve device is energized.

9. The brake release system of any one of claims 1-8, further comprising:
- a pressure sensor, such as a pressure switch, configured to issue said first signal, S1, when the pressure in the regular air supply passage drops below a predefined pressure value.

10. The brake release system of any of claims 1-9, further comprising:
- a leak arrest valve (60) having an open position in which fluid communication between the air distributor and the regular air supply passage is open, and a closed position in which fluid communication between the air distributor and at least a portion of the regular air supply passage is closed.

11. The brake release system of claim 10, wherein upon receipt of both signals S1 and S2 by the valve device, the leak arrest valve becomes automatically closed to avoid system pressure loss.

12. The brake release system of any of claims 1-11, wherein when the valve device is changed to be in the open second state, a warning message or warning signal is sent to a user interface to alert the driver of failure of the regular air supply passage.

13. The brake release system of claim 12 when dependent on claim 10, wherein the leak arrest valve is configured such that a change from its open position to its closed position is manually activatable by the driver upon receiving said warning message or warning signal.

14. The brake release system of any of claims 10-11 or any of claims 12-13 when dependent on claim 10, wherein the leak arrest valve is automatically re-opened when the electronic parking brake switch is first set in ON state and then in OFF state.

15. A vehicle, in particular a heavy-duty vehicle, comprising the brake release system according to any of claims 1-14.

## Patentansprüche

1. Bremslösesystem (20)
für ein Fahrzeug, umfassend eine Feststellbremse, die eine Bremskammer aufweist und die durch einen Fahrer steuerbar ist, indem ein elektronischer Feststellbremsschalter (26) in einen EIN-Zustand, um die Feststellbremse anzuziehen, oder in einen AUS-Zustand, um die Feststellbremse zu lösen, gebracht wird, wobei das Bremslösesystem Folgendes umfasst:
- einen Luftverteiler (28), der dazu konfiguriert ist, Druckluft zu empfangen und zu verteilen,
- einen normalen Luftzufuhrkanal (22),
der dazu konfiguriert ist, Druckluft von dem Luftverteiler zu empfangen und die Druckluft der Bremskammer (24) zum Lösen der Feststellbremse zuzuführen,
- einen Hilfsluftzufuhrkanal (38),
der dazu konfiguriert ist, Druckluft von dem Luftverteiler zu empfangen und die Druckluft der Bremskammer zum Lösen der Feststellbremse zuzuführen, wobei der Hilfsluftzufuhrkanal dazu konfiguriert ist, im Falle eines Ausfalls des normalen Luftzufuhrkanals verwendet zu werden, **dadurch gekennzeichnet, dass** das System ferner Folgendes umfasst:
- eine Ventilvorrichtung (40),
die in dem Hilfsluftzufuhrkanal bereitgestellt ist, wobei die Ventilvorrichtung Folgendes aufweist
• einen geschlossenen ersten Zustand, in dem verhindert wird, dass Druckluft von dem Hilfsluftzufuhrkanal zu der Bremskammer durch die Ventilvorrichtung zugeführt wird, und
• einen offenen zweiten Zustand, in dem zugelassen wird, dass Druckluft von dem Hilfsluftzufuhrkanal zu der Bremskammer durch die Ventilvorrichtung zugeführt wird, um die Feststellbremse zu lösen,
wobei die Ventilvorrichtung dazu konfiguriert ist, ein erstes Signal, S1, zu empfangen, das einen Druckverlust in dem normalen Luftzufuhrkanal anzeigt,
wobei die Ventilvorrichtung ferner dazu konfiguriert ist, ein zweites Signal, S2, zu empfangen, das anzeigt, dass sich der elektronische Feststellbremsschalter in dem AUS-Zustand befindet,
wobei nach Empfang beider Signale S1 und S2 die Ventilvorrichtung dazu veranlasst wird, von dem geschlossenen ersten Zustand in den offenen zweiten Zustand zu wechseln, um zuzulassen, dass Druckluft über den Hilfsluftzufuhrkanal in die Bremskammer strömt.

2. Bremslösesystem nach Anspruch 1, ferner umfassend:
- eine Sperranordnung, die einen Sperrzustand, in dem eine Fluidverbindung zwischen der Bremskammer und dem normalen Luftzufuhrkanal gesperrt ist, und einen Nichtsperrzustand, in dem die Fluidverbindung zwischen der Bremskammer und dem normalen Luftzufuhrkanal geöffnet ist, aufweist,
wobei ein Wechsel von dem geschlossenen ersten Zustand zu dem offenen zweiten Zustand der Ventilvorrichtung die Sperranordnung dazu veranlasst, von ihrem Nichtsperrzustand in ihren Sperrzustand zu wechseln.

3. Bremslösesystem nach Anspruch 2, wobei die Sperranordnung ein Wechselventil (36)
mit drei Öffnungen ist oder umfasst, und zwar eine erste Öffnung zu der Bremskammer, eine zweite Öffnung zu dem Hilfsluftzufuhrkanal und eine dritte Öffnung zu dem normalen Luftzufuhrkanal, wobei, wenn der Hilfsluftzufuhrkanal der Bremskammer Druckluft über das Wechselventil zuführt, das Wechselventil die Fluidverbindung zwischen der Bremskammer und dem normalen Luftzufuhrkanal schließt.

4. Bremslösesystem nach einem der Ansprüche 1-3, wobei, nachdem die Ventilvorrichtung in den offenen zweiten Zustand gewechselt wurde und die Ventilvorrichtung das zweite Signal S2 nicht mehr empfängt, weil der elektronische Feststellbremsschalter in den EIN-Zustand gebracht wurde, die Ventilvorrichtung wieder zurück in den geschlossenen ersten Zustand geändert wird, um ein Freigeben von Druckluft aus der Bremskammer zuzulassen.

5. Bremslösesystem nach Anspruch 4, wobei die Ventilvorrichtung eine Auslassöffnung, (54), umfasst,
wobei in dem geschlossenen ersten Zustand der Ventilvorrichtung Druckluft aus der Bremskammer durch die Auslassöffnung abgelassen wird.

6. Bremslösesystem nach einem der Ansprüche 1-5, wobei die Ventilvorrichtung ein Magnetventil umfasst, das in Richtung des geschlossenen ersten Zustands vorgespannt ist, wenn es nicht angesteuert wird, wobei, wenn die Ventilvorrichtung das erste Signal, S1, und das zweite Signal, S2, empfängt, das Magnetventil angesteuert wird, um von dem geschlossenen ersten Zustand in den offenen zweiten Zustand zu wechseln.

7. Bremslösesystem nach Anspruch 6, wobei das Magnetventil durch ein elektrisches Signal angesteuert wird, das durch den Empfang des ersten Signals, S1, und des zweiten Signals, S2, veranlasst wird.

8. Bremslösesystem nach einem der Ansprüche 6-7, wobei die Ventilvorrichtung in Reihenschaltung einen ersten Schalter und einen zweiten Schalter umfasst, wobei jeder Schalter eine offene Position und eine geschlossene Position aufweist, wobei der erste und der zweite Schalter dazu konfiguriert sind, durch die Signale S1 bzw. S2 geschlossen zu werden, wobei, wenn mindestens einer des ersten und des zweiten Schalters offen ist, die Ventilvorrichtung in dem geschlossenen ersten Zustand bleibt oder von dem offenen zweiten Zustand in den geschlossenen ersten Zustand gewechselt wird, wobei, wenn jeder des ersten und des zweiten Schalters geschlossen ist, das Magnetventil der Ventilvorrichtung angesteuert wird.

9. Bremslösesystem nach einem der Ansprüche 1-8, ferner umfassend:
- einen Drucksensor, wie beispielsweise einen Druckschalter, der dazu konfiguriert ist, das erste Signal S1 auszugeben, wenn der Druck in dem normalen Luftzufuhrkanal unter einen vorgegebenen Druckwert fällt.

10. Bremslösesystem nach einem der Ansprüche 1-9, ferner umfassend:
- ein Leckageabsperrventil (60),
das eine offene Position, in der die Fluidverbindung zwischen dem Luftverteiler und dem normalen Luftzufuhrkanal geöffnet ist, und eine geschlossene Position, in der die Fluidverbindung zwischen dem Luftverteiler und mindestens einem Abschnitt des normalen Luftzufuhrkanals geschlossen ist, aufweist.

11. Bremslösesystem nach Anspruch 10, wobei nach Empfang beider Signale S1 und S2 durch die Ventilvorrichtung das Leckageabsperrventil automatisch geschlossen wird, um einen Druckverlust im System zu verhindern.

12. Bremslösesystem nach einem der Ansprüche 1-11, wobei, wenn die Ventilvorrichtung in den offenen zweiten Zustand gewechselt wird, eine Warnmeldung oder ein Warnsignal an eine Benutzerschnittstelle gesendet wird, um den Fahrer auf einen Ausfall des normalen Luftzufuhrkanals aufmerksam zu machen.

13. Bremslösesystem nach Anspruch 12, sofern abhängig von Anspruch 10, wobei das Leckageabsperrventil dazu konfiguriert ist, dass ein Wechsel von seiner offenen Position zu seiner geschlossenen Position manuell durch den Fahrer aktiviert werden kann, nachdem er die Warnmeldung oder das Warnsignal empfangen hat.

14. Bremslösesystem nach einem der Ansprüche 10-11 oder einem der Ansprüche 12-13, sofern abhängig von Anspruch 10, wobei das Leckageabsperrventil automatisch wieder geöffnet wird, wenn der elektronische Feststellbremsschalter zuerst in den EIN-Zustand und dann in den AUS-Zustand gebracht wird.

15. Fahrzeug, insbesondere ein Schwerlastfahrzeug, umfassend das Bremslösesystem nach einem der Ansprüche 1-14.

## Revendications

1. Système de desserrage de frein (20)
pour un véhicule comprenant un frein de stationnement qui comporte une chambre de frein et qui peut être commandé par un conducteur en plaçant un commutateur de frein de stationnement électronique (26) dans un état MARCHE pour mettre en prise le frein de stationnement ou dans un état ARRÊT pour desserrer le frein de stationnement, le système de desserrage de frein comprenant :
- un distributeur d'air (28) configuré pour recevoir et distribuer de l'air sous pression,
- un passage d'alimentation en air régulier (22) configuré pour recevoir de l'air sous pression provenant du distributeur d'air et fournir l'air sous pression à la chambre de frein (24) afin de desserrer le frein de stationnement,
- un passage d'alimentation en air auxiliaire (38)
configuré pour recevoir l'air sous pression provenant du distributeur d'air et fournir l'air sous pression à la chambre de frein afin de desserrer le frein de stationnement, dans lequel le passage d'alimentation en air auxiliaire est configuré pour être utilisé en cas de défaillance du passage d'alimentation en air régulier, **caractérisé en ce que** le système comprend en outre :
- un dispositif de vanne (40)
prévu dans le passage d'alimentation en air auxiliaire, dans lequel le dispositif de vanne présente :
• un premier état fermé dans lequel l'air sous pression ne peut pas être fourni depuis le passage d'alimentation en air auxiliaire à la chambre de frein à travers le dispositif de vanne, et
• un deuxième état ouvert dans lequel l'air sous pression est permis d'être fourni depuis le passage d'alimentation en air auxiliaire à la chambre de frein à travers le dispositif de vanne pour desserrer le frein de stationnement,
dans lequel le dispositif de vanne est configuré pour recevoir un premier signal, S1, indiquant une perte de pression dans le passage d'alimentation en air régulier,
dans lequel le dispositif de vanne est en outre configuré pour recevoir un deuxième signal, S2, indiquant que le commutateur de frein de stationnement électronique est dans l'état ARRÊT, dans lequel, à la réception des deux signaux S1 et S2, le dispositif de vanne est déclenché pour passer du premier état fermé au deuxième état ouvert afin de permettre à l'air sous pression de passer dans la chambre de frein par l'intermédiaire du passage d'alimentation en air auxiliaire.

2. Système de desserrage de frein selon la revendication 1, comprenant en outre :
- un agencement de blocage ayant un état de blocage dans lequel la communication fluidique entre la chambre de frein et le passage d'alimentation en air régulier est bloquée et un état de non-blocage dans lequel la communication fluidique entre la chambre de frein et le passage d'alimentation en air régulier est ouverte,
dans lequel un changement du premier état fermé au deuxième état ouvert du dispositif de vanne déclenche le passage de l'agencement de blocage de son état de non-blocage à son état de blocage.

3. Système de desserrage de frein selon la revendication 2, dans lequel le dispositif de blocage est une vanne d'arrêt (36)
ou comprend celle-ci, ayant trois ouvertures, une première ouverture vers la chambre de frein, une deuxième ouverture vers ledit passage d'alimentation en air auxiliaire et une troisième ouverture vers le passage d'alimentation en air régulier, dans lequel, lorsque le passage d'alimentation en air auxiliaire fournit de l'air sous pression à la chambre de frein par l'intermédiaire de la vanne d'arrêt, la vanne d'arrêt ferme la communication fluidique entre la chambre de frein et le passage d'alimentation en air régulier.

4. Système de desserrage de frein selon l'une quelconque des revendications 1 à 3, dans lequel, après que le dispositif de vanne a été modifié pour passer au deuxième état ouvert et que le dispositif de vanne cesse de recevoir le deuxième signal S2 à la suite de la mise en état MARCHE du commutateur de frein de stationnement électronique, le dispositif de vanne repasse au premier état fermé pour permettre le desserrage de l'air sous pression à partir de la chambre de frein.

5. Système de desserrage de frein selon la revendication 4, dans lequel le dispositif de vanne comprend un orifice d'échappement (54),
dans lequel, dans le premier état fermé du dispositif de vanne, l'air sous pression est évacué de la chambre de frein par l'orifice d'échappement.

6. Système de desserrage de frein selon l'une quelconque des revendications 1 à 5, dans lequel le dispositif de vanne comprend une électrovanne qui est sollicitée vers le premier état fermé lorsqu'elle n'est pas alimentée en énergie, dans lequel, lorsque le dispositif de vanne reçoit le premier signal, S1, et le deuxième signal, S2, l'électrovanne est alimentée en énergie pour passer du premier état fermé au deuxième état ouvert.

7. Système de desserrage de frein selon la revendication 6, dans lequel l'électrovanne est alimentée en énergie par un signal électrique déclenché par la réception du premier signal S1 et du deuxième signal S2.

8. Système de desserrage de frein selon l'une quelconque des revendications 6 à 7, dans lequel le dispositif de vanne comprend, relié en série, un premier commutateur et un deuxième commutateur, chaque commutateur ayant une position ouverte et une position fermée, dans lequel les premier et deuxième commutateurs sont configurés pour se fermer respectivement sous l'effet des signaux S1 et S2, dans lequel, lorsqu'au moins un parmi les premier et deuxième commutateurs est ouvert, le dispositif de vanne reste dans le premier état fermé ou passe du deuxième état ouvert au premier état fermé, dans lequel lorsque chacun des premier et deuxième commutateurs est fermé, l'électrovanne du dispositif de vanne est alimentée en énergie.

9. Système de desserrage de frein selon l'une quelconque des revendications 1 à 8, comprenant en outre :
- un capteur de pression, tel qu'un commutateur de pression, configuré pour émettre ledit premier signal, S1, lorsque la pression dans le passage d'alimentation en air régulier diminue en dessous d'une valeur de pression prédéfinie.

10. Système de desserrage de frein selon l'une quelconque des revendications 1 à 9, comprenant en outre :
- une vanne anti-fuite (60)
ayant une position ouverte dans laquelle la communication fluidique entre le distributeur d'air et le passage d'alimentation en air régulier est ouverte, et une position fermée dans laquelle la communication fluidique entre le distributeur d'air et au moins une partie du passage d'alimentation en air régulier est fermée.

11. Système de desserrage de frein selon la revendication 10, dans lequel, à la réception des deux signaux S1 et S2 par le dispositif de vanne, la vanne anti-fuite se ferme automatiquement pour éviter une perte de pression de système.

12. Système de desserrage de frein selon la revendication 12, dans lequel, lorsque le dispositif de vanne passe au deuxième état ouvert, un message d'avertissement ou un signal d'avertissement est envoyé à une interface utilisateur pour alerter le conducteur d'une défaillance du passage d'alimentation en air régulier.

13. Système de desserrage de frein selon la revendication 12, lorsqu'il dépend de la revendication 10, dans lequel la vanne anti-fuite est configurée de sorte que le passage de sa position ouverte à sa position fermée peut être activé manuellement par le conducteur à la réception dudit message d'avertissement ou signal d'avertissement.

14. Système de desserrage de frein selon l'une quelconque des revendications 10 à 11 ou l'une quelconque des revendications 12 à 13 lorsqu'il dépend de la revendication 10, dans lequel la vanne anti-fuite est automatiquement rouverte lorsque le commutateur électronique du frein de stationnement est d'abord mis en état MARCHE, puis en état ARRÊT.

15. Véhicule, en particulier véhicule lourd, comprenant le système de desserrage de frein selon l'une quelconque des revendications 1 à 14.
